(19) Europäisches Patentamt
European Patent Office
Office européen des brevets

(11) **EP 2 826 156 B1**

(12) **FASCICULE DE BREVET EUROPEEN**

(45) Date de publication et mention
de la délivrance du brevet:
**17.10.2018 Bulletin 2018/42**

(21) Numéro de dépôt: **13715304.5**

(22) Date de dépôt: **12.03.2013**

(51) Int Cl.:
*H04B 5/00* (2006.01)          *H04B 17/00* (2015.01)
*H04B 17/18* (2015.01)          *H04B 1/3822* (2015.01)
*H04B 1/40* (2015.01)

(86) Numéro de dépôt international:
**PCT/FR2013/050515**

(87) Numéro de publication internationale:
**WO 2013/136008 (19.09.2013 Gazette 2013/38)**

(54) **SYSTEME DE COMMUNICATION SANS FIL A PLUSIEURS RECEPTEURS MULTIPLEXES**

DRAHTLOSES KOMMUNIKATIONSSYSTEM MIT EINER GRUPPE VON MULTIPLEXIERTEN
EMPFÄNGERN

WIRELESS COMMUNICATION SYSTEM HAVING A PLURALITY OF MULTIPLEXED RECEIVERS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.03.2012 FR 1252224**

(43) Date de publication de la demande:
**21.01.2015 Bulletin 2015/04**

(73) Titulaire: **Renault s.a.s.**
**92100 Boulogne Billancourt (FR)**

(72) Inventeurs:
• **BOHORQUEZ PRIETO, Andres**
**F-38000 Grenoble (FR)**
• **BACQUET, Sylvain**
**F-38470 Chasselay (FR)**

(56) Documents cités:
**WO-A1-02/080332          WO-A1-2008/035721
WO-A2-2011/127449          US-A- 5 025 486
US-A1- 2003 236 656          US-A1- 2010 201 513**

EP 2 826 156 B1

Il est rappelé que: Dans un délai de neuf mois à compter de la publication de la mention de la délivrance du brevet
européen au Bulletin européen des brevets, toute personne peut faire opposition à ce brevet auprès de l'Office européen
des brevets, conformément au règlement d'exécution. L'opposition n'est réputée formée qu'après le paiement de la taxe
d'opposition. (Art. 99(1) Convention sur le brevet européen).

## Description

L'invention a pour domaine technique les communications sans contact, et plus particulièrement les communications sans contact en environnement métallique.

Il est connu d'utiliser un émetteur pour fournir un champ électromagnétique afin d'alimenter des récepteurs par couplage inductif. Il est ainsi possible de transférer de l'énergie de façon efficace entre une source unique et plusieurs éléments à charger. Une application est la recharge de batteries à plusieurs cellules.

Toutefois, indépendamment de la méthode de transfert d'énergie, la recharge d'une batterie, pour être efficace, requiert des mesures, telles que la tension aux bornes de la batterie, sa température et le courant circulant entre ses bornes.

Afin de ne pas faire échec à la mise en place d'un chargement sans contact efficace, il est nécessaire de transmettre également les valeurs mesurées sans contact.

Le document DE102009035472 propose un appareil pour lire l'état de charge des batteries dans un véhicule électrique, composé par un transpondeur placé sur la batterie pour la transmission sans fil de la valeur mesurée de l'état de charge.

Le document US7911182 expose une méthode et l'appareil correspondant pour détecter une tension de batterie. Ce document divulgue essentiellement un procédé de mise en oeuvre.

D'autres brevets proposent aussi des systèmes de recharge pour les batteries, c'est le cas des documents EP2048764 et US7692404.

Le document WO02080332A1 divulgue un système de gestion de batteries de véhicule électrique.

Un but de l'invention est donc de communiquer sans contact, en régime critique, les mesures de diverses grandeurs dans un environnement métallique.

Un autre but de l'invention est de proposer une méthode de réglage optimale de la puissance d'émission.

Un autre but est de proposer un transfert multiplexé de mesures.

On propose un système de communication sans fil pour véhicule automobile muni d'une batterie amovible, comprenant un émetteur destiné à être solidaire du véhicule et apte à être relié à une unité de commande électronique du véhicule et au moins un récepteur destiné à être solidaire de la batterie amovible et à être relié à au moins un capteur apte à mesurer un paramètre de la batterie amovible, l'émetteur et les récepteurs étant aptes à échanger des données par l'intermédiaire d'un couplage inductif en régime critique.

L'émetteur peut comprendre une antenne munie d'au moins une boucle par récepteur.

Le couplage inductif entre l'émetteur et les récepteurs fonctionne en couplage critique.

L'émetteur peut comprendre une alimentation reliée à un transformateur d'impédance relié lui-même à l'antenne.

Le récepteur peut être connecté à un dispositif de commande relié aux capteurs.

Le dispositif de commande peut être relié à un circuit intégré intelligent connecté en sortie aux capteurs.

Le circuit intégré intelligent peut comprendre un microcontrôleur connecté en entrée au dispositif de commande et relié à un dispositif de multiplexage relié lui-même en sortie aux capteurs.

D'autres buts, caractéristiques et avantages apparaîtront à la lecture de la description suivante donnée uniquement en tant qu'exemple non limitatif et faite en référence aux dessins annexés sur lesquels :

- la figure 1 illustre un émetteur à couplage inductif,
- la figure 2 illustre un récepteur à couplage inductif,
- la figure 3 illustre un système de communication sans fil à plusieurs récepteurs,
- la figure 4 illustre un système de communication sans fil à plusieurs récepteurs et à adaptation d'impédance, et
- la figure 5 illustre un système de communication sans fil à plusieurs récepteurs munis de moyens de multiplexage de capteurs.

Les dispositifs de transfert d'énergie, tels que ceux employés pour la recharge de batteries sans contact, établissent un lien par champ magnétique radiofréquence entre un émetteur et au moins un récepteur.

Les organes de couplage employés pour établir ce lien sont des circuits conducteurs tels que boucles, enroulements ou bobines que l'on nomme circuits d'antenne ou bobinages antenne. A ces circuits d'antenne sont associés des composants électroniques destinés à réaliser des fonctions d'accord en fréquence, d'amortissement et d'adaptation d'impédance. L'ensemble forme alors une antenne, notamment une antenne inductive.

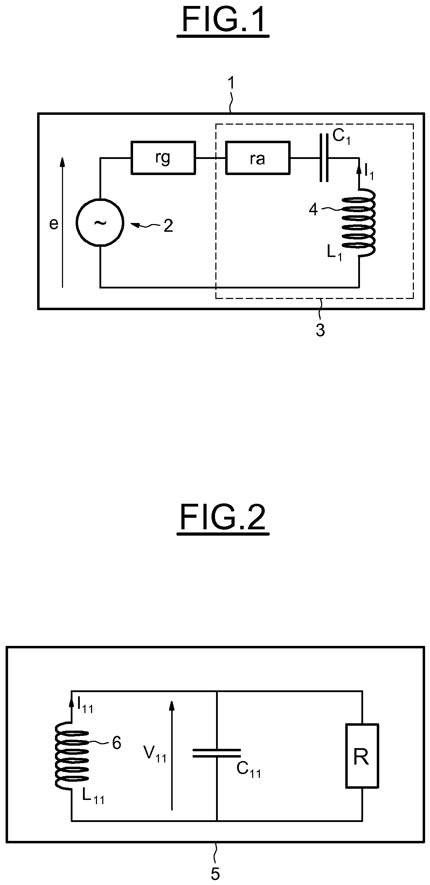

La figure 1 illustre un émetteur à couplage inductif d'un système à couplage inductif. L'émetteur 1 comprend un circuit résonant série comprenant une résistance r, une inductance $L_1$ et une capacité $C_1$. Le circuit résonant série présente une fréquence de résonance $f_1$ obtenue par l'intermédiaire des équations suivantes :

$$\omega_1 = 2\pi f_1 \qquad (Eq. 1)$$

$$L_1 C_1 \omega_1{}^2 = 1 \qquad (Eq. 2)$$

Le circuit résonnant série est connecté à un générateur radiofréquence modélisé par l'association en série d'une source de tension 2 et d'une résistance de sortie rg.

Par ailleurs, l'antenne 3 est représentée par une résistance ra associée à la capacitance $C_1$ et à l'inductance $L_1$.

Tous les éléments étant en série, le circuit résonant série présente une la résistance r égale à la somme des résistances ra et rg.

Le récepteur 5 du système à couplage inductif illustré sur la figure 2, comprend un circuit résonant parallèle, de fréquence de résonance $f_2$ obtenue par les équations suivantes :

$$\omega_2 = 2\pi f_2 \qquad (Eq. 3)$$

$$L_{11} C_{11} \omega_2{}^2 = 1 \qquad (Eq. 4)$$

Le bobinage 6 du récepteur correspond à une inductance simple $L_{11}$. Il peut être connecté à un dispositif électronique qui peut comprendre la capacité $C_{11}$. C'est notamment le cas des systèmes RFID (acronyme anglais pour « RadioFrequency Identification »). Le bobinage du récepteur peut également être connecté à une électronique en composants discrets comprenant les fonctions principales du récepteur, telles que la gestion de l'énergie ou le stockage de l'énergie.

La résistance parallèle $R_1$ représente la résistance équivalente à la résistance de la bobine et à celles de toutes les fonctions réalisées dans le récepteur.

Le couplage par lien inductif entre l'émetteur 1 et le récepteur 5 introduit une mutuelle inductance M, tant du côté de l'émetteur 1 que du côté du récepteur 5. Cette mutuelle inductance M est déterminée par application de l'équation suivante :

$$M = k_1 \sqrt{L_1 L_{11}} \qquad (Eq. 5)$$

avec $k_1$ le coefficient de couplage entre les deux antennes.

Le couplage entre l'émetteur 1 et le récepteur 5 peut présenter des caractéristiques très différentes d'efficacité du transfert d'énergie et de sensibilité au positionnement selon la conception du système à couplage inductif. Ces caractéristiques déterminent trois régimes de couplage, le couplage classique, le couplage critique et le couplage surcritique.

Dans le couplage classique, l'antenne de l'émetteur est conçue de façon indépendante ou quasi-indépendante du ou des récepteurs destinés à être couplés. La capacité $C_1$ est choisie afin de satisfaire l'équation suivante :

$$L_1 C_1 \omega_0^2 = 1 \qquad (Eq. 6)$$

La valeur ra est la réunion des pertes propres à l'antenne et d'une résistance ajoutée de sorte à fixer le coefficient de qualité et à réaliser une adaptation d'impédance. On a alors la relation suivante :

$$ra = rg \qquad (Eq. 7)$$

Cette adaptation peut être faite également par le biais d'un transformateur d'impédance ou d'un pont de capacités. Lorsque l'émetteur est seul, la moitié de l'énergie est consommée dans la résistance de sortie rg et l'autre moitié dans la résistance ra.

Lorsqu'un ou plusieurs récepteurs se couplent avec l'émetteur, il n'y a plus d'adaptation d'impédance entre le générateur et l'antenne émettrice, du fait de l'introduction du terme lié à l'inductance mutuelle M :

$$Z = jM\omega I_{11}/I_1 \qquad\qquad (Eq.\ 8)$$

Avec $I_1$ : courant circulant dans l'émetteur
$I_{11}$ : courant circulant dans le récepteur
$\omega$ : pulsation

Les dispositifs employant ce régime de couplage sont conçus de telle sorte que cette désadaptation soit faible ou modérée ($raI_1 > jM_1wI_{11} + jM_2w\ I_{22} + ...$).

Les mutuelles inductances introduites restent ainsi faibles ou négligeables. Le principal avantage procuré par ce régime est une grande souplesse d'utilisation et l'inconvénient principal un rendement de transfert d'énergie médiocre entre l'émetteur et le ou les récepteurs.

Dans le cas d'un couplage critique, on cherche à optimiser le transfert d'énergie entre un émetteur et un récepteur. Pour cela, les émetteurs sont conçus pour fonctionner avec des récepteurs aux caractéristiques et positions connues.

On choisit toujours la capacitance $C_1$ pour satisfaire l'équation 6. Toutefois il faut en plus réaliser les conditions suivantes :

$$\begin{cases} ra\ I_1 \ll jM\omega\ I_{11} \\ jM\omega\ I_{11} = rg\ I_1 \end{cases} \qquad\qquad (Eq.\ 9)$$

Ces conditions peuvent être réécrites pour faire apparaître le rapport de courants :

$$\begin{cases} ra \ll jM\omega\ I_{11}/\ I_1 \\ jM\omega\ I_{11}/\ I_1 = rg \end{cases} \qquad\qquad (Eq.\ 10)$$

Alternativement, il est possible de réaliser la condition suivante en combinaison avec la condition résultant de l'équation 6 :

$$jM\omega I_{11}/I_1 = (rg + ra) \qquad\qquad (Eq.\ 11)$$

Cependant, dans ce cas, une partie de l'énergie est perdue dans la résistance ra. Dans le cadre d'un transfert d'énergie optimisé, il est plus intéressant de choisir une valeur de la résistance ra réduite aux seules pertes de l'antenne et la plus faible possible.

En d'autres termes, on cherche à réaliser une adaptation d'impédance entre le générateur et le récepteur permettant au générateur de délivrer un maximum de puissance dans la charge. Ceci ne sera effectivement le cas que pour une seule position relative des antennes. On obtient ainsi un système optimisé en transfert d'énergie mais avec une souplesse d'utilisation limitée.

Dans le cas d'un couplage surcritique, la priorité est donnée au transfert d'énergie. On cherche toujours à satisfaire la première condition de l'équation 9. Toutefois, la deuxième condition est désormais donnée par l'équation suivante :

$$jMw\ I_{11} > rg\ I_1 \qquad\qquad (Eq.\ 12)$$

On peut ainsi avoir un rendement supérieur à la limite de 50% du couplage critique. Toutefois, pour un générateur de puissance donnée, on transférera moins d'énergie qu'en couplage critique.

Cette situation peut être illustrée par l'exemple suivant. On peut avoir un système en couplage critique qui dépense une puissance de 1W dans l'impédance de sortie rg du générateur et 1W dans le récepteur (la puissance liée à ra étant négligeable). En couplage surcritique, avec le même système, on peut obtenir une puissance de 0.5W dépensée dans rg et 0.8W dans le récepteur. Le couplage surcritique permet bien d'obtenir un rendement supérieur (62%) à la limite de 50% du couplage critique. Cependant, moins d'énergie est transférée au récepteur.

Si on est dans l'exemple d'une recharge de batterie par transfert d'énergie sans fil, le passage du couplage critique au couplage surcritique revient à augmenter le rendement en perdant en rapidité de recharge.

Côté émetteur, passer du couplage critique au couplage surcritique en gardant le même transfert d'énergie revient à avoir un générateur avec une impédance de source plus faible. Ceci revient souvent à avoir un générateur plus puissant et plus résistant aux défaillances. Dans ce régime de couplage, le générateur peut entrer en surchauffe et être rendu inutilisable s'il n'est pas dimensionné de façon adéquate.

Le transfert de données par couplage inductif dans un système de communication repose sur des principes physiques similaires à ceux relatifs au transfert d'énergie. En effet, le transfert de données correspond généralement à une modulation d'amplitude et/ou temporelle d'une onde porteuse d'énergie donnée. On module ainsi l'énergie transférée. Le système de communication étant destiné à être embarqué sur un véhicule automobile, il est conçu pour privilégier l'autonomie du véhicule et donc l'efficacité énergétique. Le couplage critique est donc préféré aux couplages classique ou surcritique.

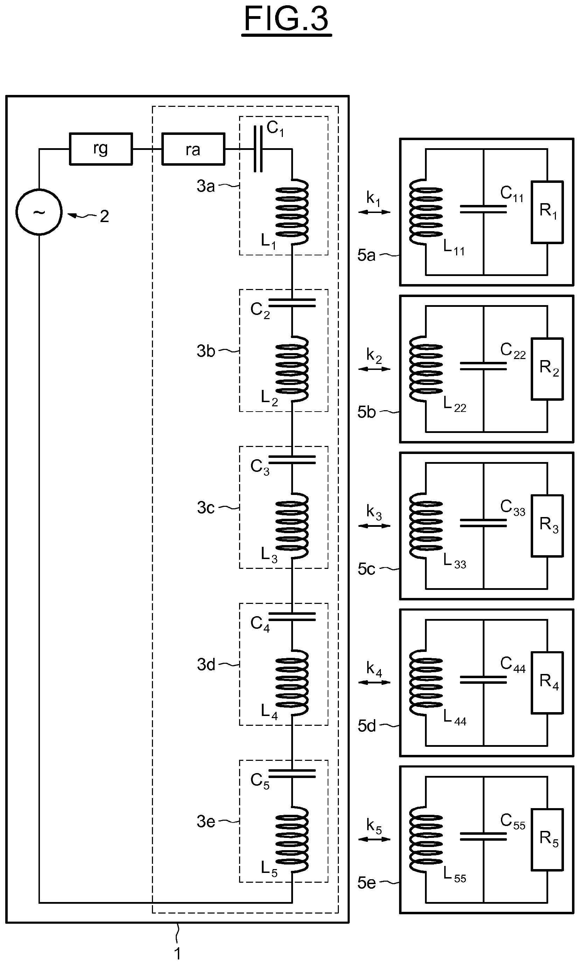

La structure de l'émetteur et des récepteurs du système de communication sera décrite en ci-après en relation avec les figures 3 à 5.

L'émetteur du système de communication applique les enseignements décrits ci-dessus.

L'antenne de l'émetteur comprend au moins autant de boucles que de récepteurs. Selon les caractéristiques techniques du champ d'induction à générer, on utilisera un ou plusieurs enroulements pour former chaque boucle. Par ailleurs, les dimensions de ces boucles sont adaptées aux dimensions des récepteurs afin que le rayonnement des boucles soit restreint dans la mesure du possible à la surface des récepteurs. On limite ainsi la puissance rayonnée à la quantité nécessaire à l'interaction avec les récepteurs.

La capacité d'accord peut être estimée en calculant l'inductance de l'antenne, qui dépend de la géométrie et du nombre d'enroulements. Afin d'éviter des phénomènes des capacités parasites indésirables, la capacitance d'accord est repartie sur l'ensemble de l'antenne, sachant que les boucles sont en série. La capacité est déterminée à la fréquence de résonance, par exemple 13.56Mhz.

La résistance ra se réduit à la résistance propre du fil conducteur. Lorsque l'on considère le transfert de puissance, cela implique un minimum de dissipation de l'énergie sur des composants passifs. Par ailleurs, cette résistance peut être employée pour écraser le facteur de qualité de l'antenne émettrice.

Un émetteur comprenant une telle antenne est illustré par la figure 3. Sur cette figure, on peut voir un système de communication sans contact dans lequel cinq récepteurs sont associés à un émetteur.

Le système de communication sans contact comprend un émetteur 1 et cinq récepteurs (5a,5b,5c,5d,5e) basés sur les principes de couplage de systèmes inductifs décrits plus haut en relation avec les figures 1 et 2.

L'émetteur 1 comprend une source de tension 2, une résistance de sortie rg, une résistance ra, et cinq antennes (3a,3b,3c,3d,3e), l'ensemble étant connecté en série. Chaque antenne (3a,3b,3c,3d,3e) comprend une capacité ($C_1$, $C_2$,$C_3$,$C_4$,$C_5$) connectée en série avec une inductance ($L_1$,$L_2$,$L_3$,$L_4$,$L_5$).

Chaque récepteur (5a,5b,5c,5d,5e) comprend une inductance ($L_{11}$,$L_{22}$,$L_{33}$,$L_{44}$,$L_{55}$) reliée en parallèle avec une capacitance ($C_{11}$,$C_{22}$,$C_{33}$,$C_{44}$,$C_{55}$) et une résistance ($R_1$,$R_2$,$R_3$,$R_4$,$R_5$).

Chaque récepteur (5a,5b,5c,5d,5e) est couplé par induction avec une antenne (3a,3b,3c,3d,3e) de l'émetteur 1, chaque couplage inductif étant caractérisé par un coefficient (k1,k2,k3,k4,k5) permettant de déterminer l'inductance mutuelle M par application de l'équation 5.

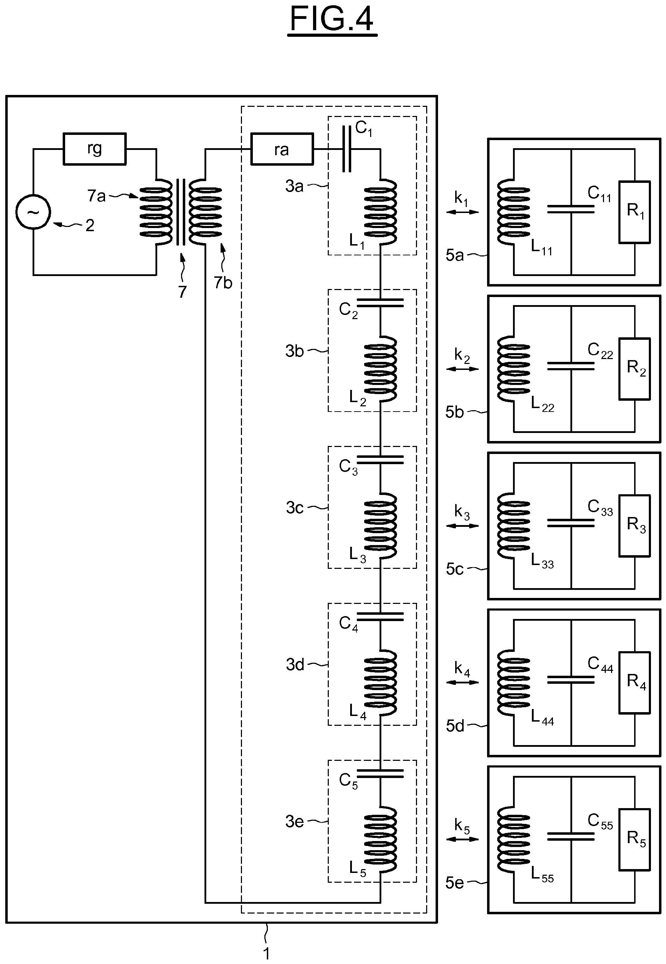

La figure 4 illustre un système de communication sans contact dans lequel l'émetteur comprend un transformateur d'impédance 7 et est associé en série à cinq récepteurs. La figure 4 reprend les principaux éléments de la figure 3 qui assument les mêmes rôles. La figure 4 se différencie de la figure 3 de par la présence du transformateur 7 d'impédance, dont l'enroulement primaire 7a est raccordé à la résistance rg d'une part et au générateur de tension 2 d'autre part. L'enroulement secondaire 7b est quant à lui raccordé d'une part à la résistance ra et d'autre part à l'impédance $L_5$.

Le transformateur d'impédance 7 permet d'adapter l'impédance de l'antenne au générateur. Le rapport de transformation entre l'enroulement primaire 7a et l'enroulement secondaire 7b est donné par l'équation suivante :

$$\frac{Z_1}{Z_2} = \left(\frac{N_1}{N_2}\right)^2 \qquad\qquad (Eq. \ 13)$$

Cette adaptation est faite de telle sorte à obtenir une impédance de sortie de l'émetteur comparable à l'impédance du récepteur compte tenu de l'influence de l'environnement métallique. De plus, étant donné que la présence de la batterie et du transformateur d'impédance ajoute une inductance supplémentaire, il est nécessaire d'en compenser la présence en modifiant la valeur de la capacitance. Il est ainsi possible d'obtenir une valeur souhaitée d'impédance vue par l'antenne émetteur, par exemple 50 Ω.

Le système illustré par la figure 4 permet ainsi de disposer d'un choix plus important de valeurs d'impédance.

Cela présente l'avantage d'une plus grande liberté de conception et de dimensionnement des bobinages, des antennes et de l'électronique d'émission. Il est ainsi possible d'utiliser un générateur classique ayant une impédance de sortie de 50 Ω. En contrepartie, un composant supplémentaire est nécessaire.

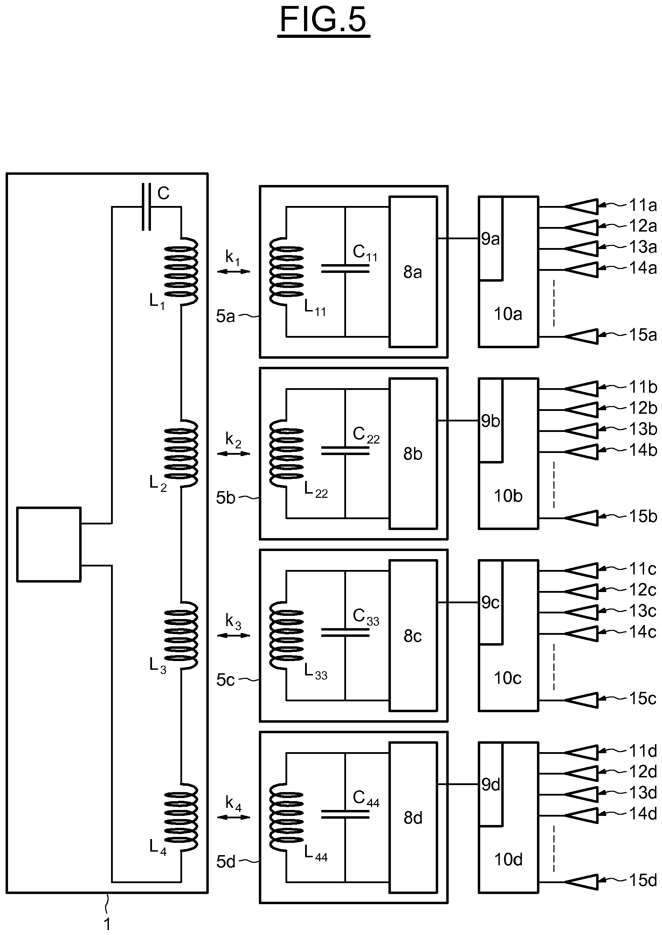

La figure 5 illustre un système de communication entre un émetteur et plusieurs récepteurs illustrant l'intégration des récepteurs à des systèmes d'acquisition de données comprenant des capteurs, notamment des capteurs multiplexés.

Un système de communication peut être intégré dans un système d'acquisition de données et comprendre un récepteur (5a,5b,5c,5d) muni d'un dispositif de commande (8a,8b,8c,8d), d'un circuit intégré intelligent (9a,9b,9c,9d), d'un système de multiplexage de capteurs (10a,10b,10c,10d) et de capteurs 11a à 15d. Les capteurs peuvent être notamment des capteurs de température, tension, pression ou courant. Lorsque le récepteur est couplé (5a,5b,5c,5d), l'émetteur 1 envoie une commande qui sera traduite par le dispositif de commande (8a,8b,8c,8d) en des instructions de commande à destination du circuit intégré intelligent (9a,9b,9c,9d) lequel pilote le système de multiplexage (10a, 10b,10c,10d). En retour, le circuit intégré intelligent (9a,9b,9c,9d) émet la ou les valeurs requises mesurées par les capteurs vers le dispositif de commande (8a, 8b, 8c, 8d). Les échanges d'instructions et de valeurs mesurées peuvent être réalisés par l'intermédiaire d'un bus série, notamment un bus SPI™. Les données sont ensuite transmises par lien RFID vers l'émetteur 1.

Le circuit intégré intelligent (9a,9,b,9c,9d,10a,10b,10c,10d) peut comprendre un microcontrôleur (9a,9,b,9c, 9d) connecté en entrée au dispositif de commande (8a,8b,8c,8d) et relié à un dispositif de multiplexage (10a,10b,10c, 10d) relié lui-même en sortie aux capteurs. Il est aussi possible que le circuit intégré intelligent (9a,9b,9c,9d) prenne en charge les fonctions du système de multiplexage (10a,10b,10c,10d). Il est aussi possible de mettre en place un convertisseur analogique/numérique piloté permettant au dispositif de commande (8a,8b,8c,8d) d'émettre des commandes plus précises permettant de choisir le capteur dont la mesure est transmise, ou bien de spécifier l'émission de mesures de capteurs selon un certain ordre.

Bien que non représenté sur les figures décrites plus haut, les positions de l'antenne émettrice et de celles des récepteurs jouent un rôle très important dans l'optimisation du transfert de puissance, et dans l'obtention d'un couplage critique. L'ensemble du système doit donc être positionné le plus précisément possible dans l'espace. En effet, un décalage horizontal ou vertical peut mener à une perte d'efficacité du couplage, tandis qu'une distance trop faible entre émetteur et récepteur peut mener à un couplage surcritique qui n'est pas souhaité.

Pour obtenir un placement précis, il est possible d'employer des structures disposant d'un système d'accroche rapide, permettant de positionner précisément l'émetteur par rapport au récepteur tout en conservant la possibilité de retirer la batterie avec les capteurs qui y sont connectés.

L'antenne du récepteur et les capteurs peuvent être réalisés dans un matériau souple tel que le Kapton™ afin de pouvoir atteindre tous les emplacements possibles de la surface de la batterie et afin de pouvoir diminuer le poids de l'ensemble.

Alternativement, il est possible de prévoir une résistance supplémentaire afin de passer d'un couplage surcritique à un couplage critique, notamment lorsque l'on ne peut pas faire varier la distance entre l'émetteur et le récepteur. En effet, le coefficient de couplage critique dépend du facteur de qualité de l'émetteur et du récepteur et peut être réduit en ajoutant une résistance en série coté émetteur et/ou en parallèle coté récepteur.

Par contre, si l'ajout se fait coté émetteur, la résistance sera source de dissipation d'énergie. Si l'ajout se fait coté récepteur, le facteur de qualité diminuera.

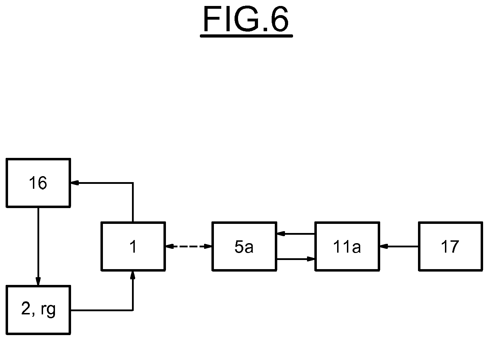

La figure 6 illustre une vue générale du système de communication sans fil. On peut voir l'émetteur 1 relié à l'alimentation 2,rg pilotée par une unité de commande électronique 16. L'émetteur 1 est également connecté en sortie à l'unité de commande électronique afin de pouvoir lui transmettre les informations reçues.

On peut voir également qu'un récepteur 5a est connecté à un capteur 11a disposé sur la batterie amovible 17. Le capteur 11a est activé par la réception d'un signal du récepteur 5a et transmet en retour les informations des mesures effectuées sur la batterie amovible 17. Les informations de mesure sont ensuite transmises à l'émetteur 1 par le biais du couplage inductif entre émetteur et récepteur. L'émetteur 1 les transmet ensuite à l'unité de commande électronique 16.

Le système de communication sans fil est ainsi optimisé quant à la consommation d'énergie entre un émetteur et plusieurs récepteurs en présence d'un objet métallique notamment dans un véhicule automobile. Ce système permet de réduire la quantité des connexions directes sur un pack batterie.

L'un des applications de ce système est la mesure de la température en plusieurs points de la batterie afin de créer une cartographie thermique tridimensionnelle. Ceci permet de connaître l'état de chaque cellule de la batterie, afin d'en optimiser le chargement et de réduire les risques d'endommagement ou d'explosion.

**Revendications**

**1.** Système de communication sans fil pour véhicule automobile muni d'une batterie amovible (17), **caractérisé par le fait qu'**il comprend un émetteur (1) destiné à être solidaire du véhicule et apte à être relié à une unité de commande électronique (16) du véhicule et au moins un récepteur (5) destiné à être solidaire de la batterie amovible et à être relié à au moins un capteur apte à mesurer un paramètre de la batterie amovible, l'émetteur (1) et les récepteurs étant aptes à échanger des données par l'intermédiaire d'un couplage inductif en régime critique.

2. Système selon la revendication 1, dans lequel l'émetteur (1) comprend une antenne (3) munie d'au moins une boucle par récepteur (5).

3. Système selon l'une quelconque des revendications précédentes, dans lequel l'émetteur (1) comprend une alimentation (2,rg) reliée à un transformateur d'impédance (7) relié lui-même à l'antenne (3).

4. Système selon l'une quelconque des revendications précédentes, dans lequel le récepteur est connecté à un dispositif de commande (8) relié aux capteurs.

5. Système selon la revendication 4, dans lequel le dispositif de commande (8a,8b,8c,8d) est relié à un circuit intégré intelligent (9a,9,b,9c,9d,10a,10b,10c,10d) connecté en sortie aux capteurs.

6. Système selon la revendication 5, dans lequel le circuit intégré intelligent (9a,9,b,9c,9d,10a,10b,10c,10d) comprend un microcontrôleur (9a,9,b,9c,9d) connecté en entrée au dispositif de commande (8a,8b,8c,8d) et relié à un dispositif de multiplexage (10a,10b,10c,10d) relié lui-même en sortie aux capteurs.

**Patentansprüche**

1. Drahtloses Kommunikationssystem für ein Kraftfahrzeug, ausgerüstet mit einer herausnehmbaren Batterie (17), **dadurch gekennzeichnet, dass** es einen Sender (1), der dazu bestimmt ist, fest mit dem Fahrzeug verbunden zu sein und fähig zu sein, mit einer elektronischen Steuereinheit (16) des Fahrzeugs verbunden zu sein, und mindestens einen Empfänger (5) umfasst, der dazu bestimmt ist, fest mit der herausnehmbaren Batterie verbunden zu sein und mit mindestens einem Sensor verbunden zu sein, der fähig ist, einen Parameter der herausnehmbaren Batterie zu messen, wobei der Sender (1) und die Empfänger fähig sind, mittels einer induktiven Kopplung Daten in kritischer Geschwindigkeit auszutauschen.

2. System nach Anspruch 1, wobei der Sender (1) eine Antenne (3) umfasst, die mit mindestens einer Leitungsschleife je Empfänger (5) ausgerüstet ist.

3. System nach einem der vorhergehenden Ansprüche, wobei der Sender (1) ein Netzteil (2, rg) umfasst, das mit einem Impedanzwandler (7) verbunden ist, der wiederum mit der Antenne (3) verbunden ist.

4. System nach einem der vorhergehenden Ansprüche, wobei der Empfänger an eine Steuervorrichtung (8) angeschlossen ist, die mit den Sensoren verbunden ist.

5. System nach Anspruch 4, wobei die Steuervorrichtung (8a, 8b, 8c, 8d) mit einem intelligenten integrierten Schaltkreis (9a, 9b, 9c, 9d, 10a, 10b, 10c, 10d) verbunden ist, der am Ausgang an die Sensoren angeschlossen ist.

6. System nach Anspruch 5, wobei der intelligente integrierte Schaltkreis (9a, 9b, 9c, 9d, 10a, 10b, 10c, 10d) einen Mikrosteuerbaustein (9a, 9b, 9c, 9d) umfasst, der am Eingang an die Steuervorrichtung (8a, 8b, 8c, 8d) angeschlossen ist und mit einer Multiplexvorrichtung (10a, 10b, 10c, 10d) verbunden ist, die wiederum am Ausgang mit den Sensoren verbunden ist.

**Claims**

1. Wireless communication system for a motor vehicle provided with a removable battery (17), **characterized by** the fact that it includes a transmitter (1) intended to be rigidly connected to the vehicle and capable of being connected to an electronic control unit (16) of the vehicle and at least one receiver (5) intended to be rigidly connected to the removable battery and to be connected to at least one sensor capable of measuring a parameter of the removable battery, the transmitter (1) and the receivers being capable of exchanging data via an inductive coupling in a critical state.

2. System according to Claim 1, in which the transmitter (1) includes an antenna (3) provided with at least one loop per receiver (5).

3. System according to either one of the preceding claims, in which the transmitter (1) includes a power supply (2, rg) connected to an impedance transformer (7) itself connected to the antenna (3).

4. System according to any one of the preceding claims, in which the receiver is connected to a control device (8) connected to the sensors.

5. System according to Claim 4, in which the control device (8a, 8b, 8c, 8d) is connected to an intelligent integrated circuit (9a, 9b, 9c, 9d, 10a, 10b, 10c, 10d) connected at the output to the sensors.

6. System according to Claim 5, in which the intelligent integrated circuit (9a, 9b, 9c, 9d, 10a, 10b, 10c, 10d) includes a microcontroller (9a, 9b, 9c, 9d) connected at the input to the control device (8a, 8b, 8c, 8d) and connected to a multiplexing device (10a, 10b, 10c, 10d) itself connected at the output to the sensors.

# FIG.1

# FIG.2

# FIG.3

# FIG.4

# FIG.5

# FIG.6

**EP 2 826 156 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102009035472
- US 7911182 B
- EP 2048764 A
- US 7692404 B
- WO 02080332 A1